Europäisches Patentamt

European Patent Office

Office européen des brevets

(11) Publication number: **0 225 791**
**A1**

# (12) EUROPEAN PATENT APPLICATION

(21) Application number: **86309480.1**

(22) Date of filing: **05.12.86**

(51) Int. Cl.⁴: **F 16 D 65/56**

(30) Priority: **10.12.85 GB 8530426**

(43) Date of publication of application:
**16.06.87 Bulletin 87/25**

(84) Designated Contracting States: **DE FR GB IT**

(71) Applicant: **LUCAS INDUSTRIES public limited company**
**Great King Street**
**Birmingham, B19 2XF West Midlands (GB)**

(72) Inventor: **Aveyard, Duncan Ashley**
**9 Beal Close Heaton Mersey**
**Stockport Cheshire (GB)**

**Goddard, Christopher John**
**14 Antrobus Close**
**Hatton Warwickshire (GB)**

**Sturgess, Peter George**
**27 Jessop Road Rogerstone**
**Newport Wales, NP1 0BS (GB)**

(74) Representative: **Stringer, David Hiram et al**
**W.P. THOMPSON & CO Coopers Building Church Street**
**Liverpool L1 3AB (GB)**

(54) **Improvements relating to brake actuators.**

(57) The present invention relates to a brake actuator for use in a disc brake, the brake actuator incorporating an automatic adjuster mechanism to take account of friction pad wear. In certain known brake actuators a clutch mechanism comprising one or more clutches is used to provide for the required control of the rotational movement of a threaded adjuster sleeve (19) in which a tappet (21) is located. These clutches are located around the outside surface of the adjuster sleeve (19) and thus, due to overall spatial requirements within the actuator (1), the outside diameter of the adjuster sleeve (19) and as a result, the diameter of the threaded bore in the adjuster sleeve (19), have to be limited in size. The threaded tappet (21) thus comprises an enlarged diameter head region and a reduced diameter threaded region. Due to the limited diameter of the tappet (21), the tappet (21) can tilt or be damaged, resulting in premature and/or even pad wear.

The present invention provides a brake actuator comprising a drive shaft 93) rotatably supported in an actuator housing (1) and coupled to an internally threaded adjuster sleeve (19) by coupling means (7) which convert rotational movement of the drive shaft (3) into axial movement of the adjuster sleeve (19). The internally threaded adjuster sleeve (19) is retained against rotational movement and is screw threadedly engaged with a hollow tappet (21) within which a clutch mechanism (23, 35) for interconnecting the drive shaft (3) and tappet (21), is located. The clutch mechansim (23, 25) is thus located within the hollow tappet (21) so that the diameter of the threaded connection between the tappet (21) and adjuster sleeve (19) can be optimised to at least reduce the problems of premature and uneven pad wear inherent in previous constructions.

Fig 1

Bundesdruckerei Berlin

**Description**

IMPROVEMENTS RELATING TO BRAKE ACTUATORS

The present invention relates to a brake actuator for use in a disc brake.

In particular the present invention relates to a brake actuator for use in a disc brake, the brake actuator incorporating an automatic adjuster mechanism to take account of friction pad wear. The type of brake actuator to which the present invention particularly relates comprises a rotatable drive shaft which is coupled to an internally threaded adjuster sleeve so as to move the adjuster sleeve in an axial direction as the drive shaft is rotated; an externally threaded tappet being screw threadedly engaged in said adjuster sleeve. The actuator is designed to allow for a certain predetermined amount of axial movement without the adjuster sleeve being rotated relative to the tappet, to thus permit the tappet to normally move a friction pad against a brake disc to thus apply the brake. However, if this predetermined amount of axial movement is exceeded due to pad wear, then the internally threaded adjuster sleeve and said tappet are rotated with respect to each other by means of the drive shaft, until the friction pad contacts the disc. When the brake is released the drive shaft rotates under spring action, in the opposite direction and moves in the opposite axial direction drawing the adjuster sleeve and tappet away from the disc. However, the adjuster sleeve and tappet do not rotate relative to each other during this brake releasing operation and thus the adjusted relative positions of the adjuster sleeve and tappet are maintained and adjustment will only occur during future braking operations when the predetermined available amount of axial movement has to be exceeded due to pad wear.

In known brake actuators of the above type a clutch mechanism comprising one or more clutches is used to provide for the required control of the rotational movement of the adjuster sleeve. In one such actuator a multi-plate friction clutch which slips at a controlled torque in either direction and a wrap spring clutch which locks in one direction and slips in the other are necessary. These clutches are used to interconnect the adjuster sleeve with the drive shaft and thus rotate the adjuster sleeve on the tappet when adjustment is required. These clutches are therefore located around the outside surface of the adjuster sleeve and thus, due to overall spatial requirements within the actuator, the outside diameter of the adjuster sleeve and as a result, the diameter of the threaded bore in the adjuster sleeve, have to be limited in size. The threaded tappet thus comprises an enlarged diameter head region and a reduced diameter threaded region; the diameter of the threaded region being limited in size due to the limited diameter of the complimentarily threaded bore in the adjuster sleeve. Due to the limited diameter of the threaded region of the tappet and the bore in which it engages, the tappet can be liable to tilt when the brake is applied, this possibly leading to uneven pad wear and definitely applying a large load to the thread between the tappet and adjuster sleeve. This load can lead to premature thread wear which amplifies the problem and possible resultant uneven pad wear.

An aim of the present invention is to optimize the diameter of the threaded region of the tappet in an actuator of the above described type, to thus at least reduce the above outlined problems.

According to the present invention there is provided a brake actuator comprising a drive shaft rotatably supported in an actuator housing and coupled to an internally threaded adjuster sleeve by coupling means which convert rotational movement of the drive shaft into axial movement of the adjuster sleeve, the internally threaded adjuster sleeve being retained against rotational movement and being screw threadedly engaged with a hollow tappet within which a clutch mechanism for interconnecting the drive shaft and tappet, is located.

In one embodiment of the present invention the rotatable drive shaft is connected to an adjuster sleeve in the form of an annular ring, by coupling means in the form of a helical ball ramp assembly. One part of the helical ball ramp assembly comprises a cylindrical sleeve which has a helical axial end face, the inner surface of this cylindrical sleeve being splined to the drive shaft so as to rotate with the drive shaft. Another part of the helical ball ramp assembly is a similar cylindrical sleeve also with a helical axial end face, said helical end faces facing each other and engaging a ball race assembly located therebetween. Said another part is keyed to the actuator housing so that rotation of said one part causes said another part to move coaxially and press against said annular adjuster ring. Said annular adjuster ring is internally threaded and engages an external thread provided on a hollow cylindrical tappet. Within the hollow tappet a clutch mechanism comprising a multi-plate friction clutch and a wrap spring clutch are located. The multi-plate clutch is comprised of annular members which are located over an elongate drive shaft extension which is coupled coaxially with the drive shaft via the wrap spring clutch. The adjacent members of the multi-plate clutch have radially inwardly and outwardly extending tags respectively, which engage in an axially extending slot in the drive shaft extension and in an axially extending slot in the inside wall of the hollow tappet, respectively. The slot in the drive shaft extension is circumferentially oversized to allow for sufficient drive shaft rotation for normal brake operation without adjustment; the plate members of the multi-plate friction clutch being compressed and gripped together by a spring which presses the plates against a stop on the inner wall of the tappet. Alternatively however the slot in the inner wall of the tappet may be circumferentially oversized to produce the same effect.

In use, rotation of the drive shaft causes the annular adjuster ring which is keyed to the actuator housing to prevent rotation, to move axially causing the tappet to also move axially and press a friction pad against a brake disc. If however pad wear exceeds a predetermined amount then the drive shaft extension which is locked to the drive shaft in the direction of rotation corresponding to a brake application, will rotate sufficiently for the edge of the slot to engage a radial extension of a number of the clutch plate members so that continued rotation of the drive shaft will rotate the tappet, the tappet being thus screwed out along the internal thread of the annular adjuster ring. When the tappet attains the position where the friction pad is pressed against the brake disc, the clamp force will prevent the tappet from rotating further and the clutch plates will slip when sufficient torque is applied. The mechanism is thus load insensitive.

When the brakes are released the drive shaft rotates under spring action, in the opposite direction and the drive shaft extension rotates with the drive shaft until the other edge of the circumferentially oversized slot engages the radial extensions of the multi-plate clutch, the multi-plate clutch then holding the tappet and drive shaft extension together and causing the wrap spring to allow the drive shaft to continue rotation in the said opposite direction, relative to the drive shaft extension. Thus the adjuster position of the tappet relative to the annular adjuster ring is maintained, allowing for brake application without adjustment until the clutch plate extensions once more engage the edge of the circumferentially oversized slot in the drive shaft extension.

Preferably two coaxially arranged annular adjuster rings are provided with a resilient spacer located therebetween. In this way the resilient spacer biasses the rings apart when the brake is not being applied, so that the threads on the annular adjuster rings press in opposite directions against the complimentary thread on the tappet, preventing vibration from causing accidental rotation and adjustment. When the brake is applied the resilient member is compressed so that the adjuster rings assume their complimentary thread positions relative to the tappet thread.

By virtue of the present invention as evidenced by the above construction, the required clutch mechanism is located within the hollow tappet allowing the diameter of the tappet and its threaded connection with the adjuster sleeve, to be maximised, thus increasing tappet stability, reducing threaded wear and also reducing the likelihood of uneven pad wear.

In another improved embodiment of the present invention, the sole distinction from the above described embodiment lies in the type of clutch mechanism and the fact that the drive shaft extension is integral with the drive shaft. In this improved embodiment the clutch mechanism is formed by a C-shaped plate spring which engages around and grips the drive shaft extension within the hollow tappet, by virtue of a number of axially extending, inwardly directed ribs, one end region of the plate spring extending generally radially away from the drive shaft extension and engaging in an axially extending slot provided on the inner wall of the tappet; the slot being circumferentially oversized with respect to the thickness of said one end region of the C-shaped plate spring. In operation, rotation of the drive shaft to apply the brake causes the adjuster sleeve to move the tappet axially to press a friction pad against the brake disc. If pad wear exceeds a predetermined amount the drive shaft extension will rotate sufficiently to cause said one end region of the C-shaped plate spring to engage one circumferential edge of the slot in the inner wall of the tappet, resulting in the spring being wound tighter around the drive shaft extension, the tappet rotating with the drive shaft and being thus moved axially forwards along the thread of the adjuster sleeve. When the friction pad engages the brake disc and the clamp force increases to a sufficient level, the drive shaft extension rotates relative to the spring, the rib sliding over the surface of the drive shaft extension. When the brakes are released the drive shaft rotates in the opposite direction under spring action, and said one end region of the spring moves circumferentially across the slot in the inner wall of the tappet to engage the opposite edge thereof. Continued rotation of the drive shaft in this opposite direction causes the spring to tend to unwind from around the drive shaft extension as a result of frictional forces in the thread interconnecting the tappet and adjuster sleeve, so that the drive shaft is released from the tappet and the tappet maintains its adjusted position relative to the adjuster sleeve.

In a modified embodiment of the last mentioned embodiment, the C-shaped plate spring presses outwardly to engage the inner wall of the tappet, one end region of the spring extending inwardly to engage in an axially extending slot in the drive shaft extension, which slot is circumferentially oversized with respect to the thickness of said one end region of the spring.

In a further modified embodiment the C-shaped spring is replaced by an S-shaped spring which is secured with a limited amount of rotational play, to the drive shaft extension with its curved extremities engaging the inner wall of the tappet. Thus, in one direction of rotation the spring presses outwardly to rotate the tappet when said limited amount of rotational play has been taken up, whilst in the other direction the tappet is released.

In any of the above embodiments of the present invention the adjuster sleeve may be integrally formed with the said another part of the helical ball ramp assembly.

In a still further embodiment of the present invention wherein the adjuster sleeve is integral with part of the coupling means e.g. with part of the helical ball ramp assembly, a clutch mechanism comprising a pair of interengaging annular ratchet members is provided. One annular member provided with a ratchet profile on its lower face, is fixedly mounted coaxially within the hollow tappet on the tappet wall, whilst the other annular member with a ratchet profile on its upper face, is located over the drive shaft extension, this other annular member being keyed with clearance to the drive shaft extension and arranged to allow for axial movement therealong. This other annular member is spring biassed against said one annular member by a suitable spring e.g. a Belleville washer. The interengaging ratchet faces each have different gradients to each side of each apex so that relative rotation in one direction is possible quite easily e.g. brake release, whereas clamp pressure is required to overcome the apex in the opposite direction. In use the ratchet member locks the tappet and drive shaft together for adjustment when the said clearance has been taken up. When the brake is applied the clamp force produces torques which overcome the Belleville washer to allow said other annular ratchet member to rotate relative to said one ratchet member. On brake release the ratchet face design allows the ratchet members to move relative to each other so that the adjustment is maintained. With an alternative ratchet design which solely allows relative rotation in one direction, a wrap spring clutch between the drive shaft and drive shaft extension, may be provided to allow for the rotation of the drive shaft in the brakes-off direction so that the adjustment of the tappet on the adjuster sleeve is maintained.

In all of the above embodiments of the present invention, the clutch mechanism is within the tappet and between the tappet and drive shaft, thus allowing the diameter of the thread between the tappet and adjuster sleeve to be maximised whereby tappet stability is improved as compared to prior art constructions.

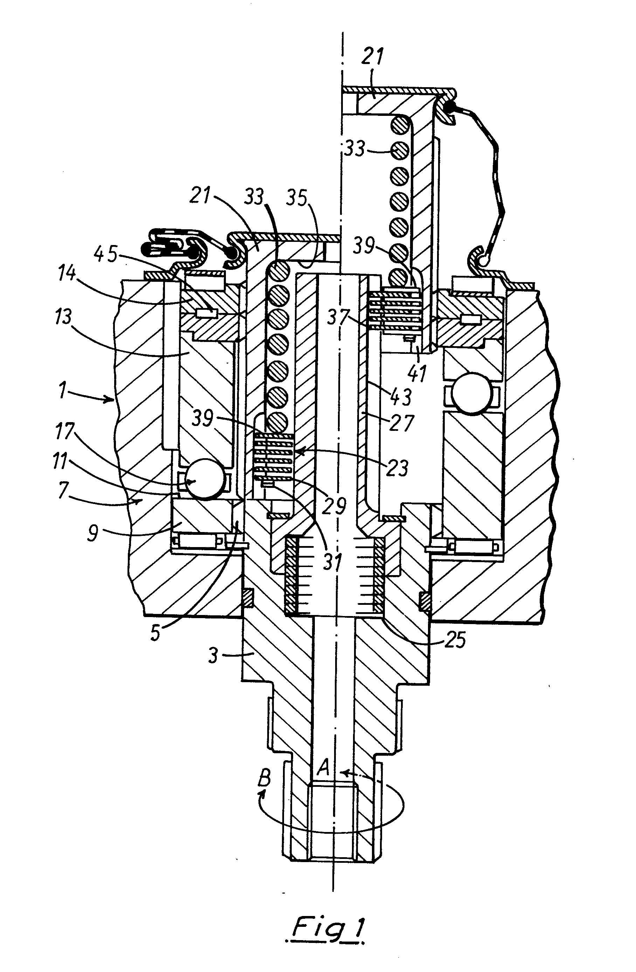

The present invention will now be further described, by way of example, with reference to the accompanying drawings, in which:- Fig. 1 is a schematic cross-sectional view of one embodiment of the present invention; opposite sides showing different adjustments;

Fig. 2 is a schematic cross-sectional view of another embodiment of the present invention; opposite sides showing different adjustments;

Fig. 3 is a cross-sectional view taken along line X-X in fig. 2;

Fig. 4 is a schematic cross-sectional view of a further embodiment of the present invention; opposite sides showing different embodiments;

Fig. 5 is a cross-sectional view taken along line Y-Y in Fig. 4;

Fig. 6 is a cross-sectional view showing a modified enlarged detail for use in the embodiment of Fig. 4; and

Fig. 7 is a schematic cross-sectional view of a still further embodiment of the present invention; opposite sides showing different adjustments.

The brake actuator constructed according to the present invention and illustrated in Fig. 1 of the accompanying drawings, comprises an actuator housing 1 within which a drive shaft 3 is rotatably mounted. The drive shaft 3 is connected as at 5 to coupling means in the form of a helical ball ramp assembly generally designated 7. One part 9 of the helical ball ramp assembly 7 is a cylindrical sleeve with a helically shaped axial end face 11, this said one part being rotatably mounted in the actuator housing 1. Another part 13 of the helical ball ramp assembly 7 is also a cylindrical sleeve with a helically shaped axial end face 15, said end faces 11;15 engaging a caged ball race 17 located between said sleeves. Rotation of the drive shaft 3 thus causes said one part 9 of the helical ball ramp assembly 7 to rotate causing the said another part 13 which is keyed against rotation, to move axially and press against a pair of internally threaded annular adjuster rings 19 which form an adjuster sleeve; said adjuster rings 19 being also keyed against rotation. The adjuster rings 19 each threadedly engage a complimentary thread formed on the outer cylindrical surface of a hollow elongate tappet 21. Thus rotation of the drive shaft 1 moves the adjuster rings 19 and the tappet 21 to press a friction pad (not shown) against a brake disc (not shown).

Located within the hollow tappet 21 is a clutch mechanism comprising a multi-plate friction clutch 23 and a wrap spring clutch 25. The wrap spring 25 interconnects the drive shaft 3 with an elongate drive shaft extension 27 which is coaxially arranged with the drive shaft 3. The drive shaft 3 and drive shaft extension 27 are locked together by the wrap spring clutch 25 in the direction of drive shaft rotation corresponding to brake application, but are separable for rotation in the opposite direction. The multi-plate friction clutch 23 comprises a number of superposed annular clutch members 29 which are located over the drive shaft extension 27 within the tappet 21, and which are pressed together against a stop 31 on the inside of the tappet 21 by a helical spring 33 which engages against the closed front end 35 of the tappet 21. Adjacent annular clutch members 29 have radially inwardly and radially outwardly extending tags 37;39 respectively, the radially outwardly extending tags 39 engaging closely in an axially extending slot 41 in the inside wall of the tappet 21, and the radially inwardly extending tags 37 engaging in an axially extending slot 43 in the drive shaft extension 27, which slot 43 is circumferentially oversized with respect to the tags 37. In an alternative embodiment the slot 41 in the tappet wall can be oversized and the slot 43 in the drive shaft extension 27 can be a close fit on the inwardly directed tags 37.

Between the two adjuster rings 19 a resilient ring 45 is provided, which biasses the adjuster rings 19 axially apart and thus presses the internal threads on the adjuster rings 19 against the threads on the tappet 21 preventing any accidental rotation and thus adjustment, due to vibration.

In use, the drive shaft 3 is rotated in the direction A to cause said adjuster rings 19 to move together with the tappet 21, axially to apply the brake. During normal brake application when adjustment is not required, rotation of the drive shaft 3 rotates the drive shaft 27 insufficiently for a circumferential edge of slot 43 to engage an inwardly directed tag 37 of the multi-plate friction clutch 23. Thus the tappet 21 is moved solely axially to apply the brake. However if pad wear exceeds a predetermined amount, then rotation of the drive shaft 3 and the drive shaft extension 27 will necessarily be greater and the slot 43 will thus engage an inwardly directed tag 37 of the multi-plate clutch 23 causing the tappet 21 to rotate and be thus screwed along the internal thread of the adjuster rings 19 until the tappet 21 presses the fiction pad (not shown) against the brake disc (not shown). As the clamp force increases the torque applied to the multi-plate clutch 23 reaches a level where the multi-plate clutch 23 slips, preventing damage to the adjuster.

When the brake is released, spring action rotates the drive shaft 3 in the opposite direction B, and the slot 43 in the drive shaft extension 27, moves over the inwardly directed tags 37 of the multi-plate friction clutch 23 until the tags 37 engage the other circumferential edge of the slot 43. Continued rotation of the drive shaft 3 in the direction B causes the wrap spring clutch 25 to release the the drive shaft extension 27 as a result of the grip of the multi-plate clutch 23. The tappet 21 thus maintains its adjusted position with respect to the adjuster rings 19.

By virtue of the clutch mechanism 23;25 being located within the tappet, the diameter of the tappet and the threaded connection with the adjuster rings 19 is maximised, improving tappet stability and thread life.

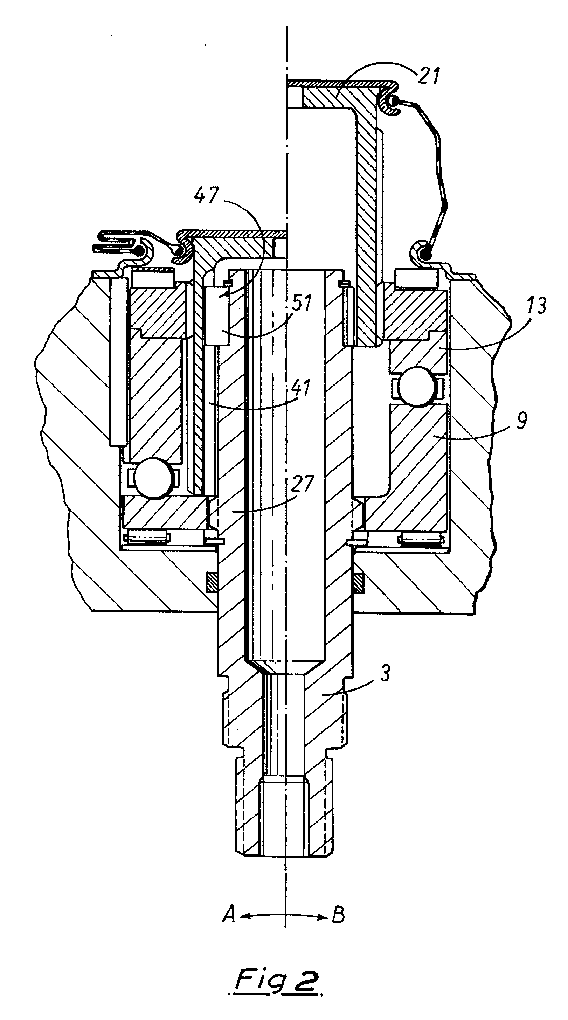

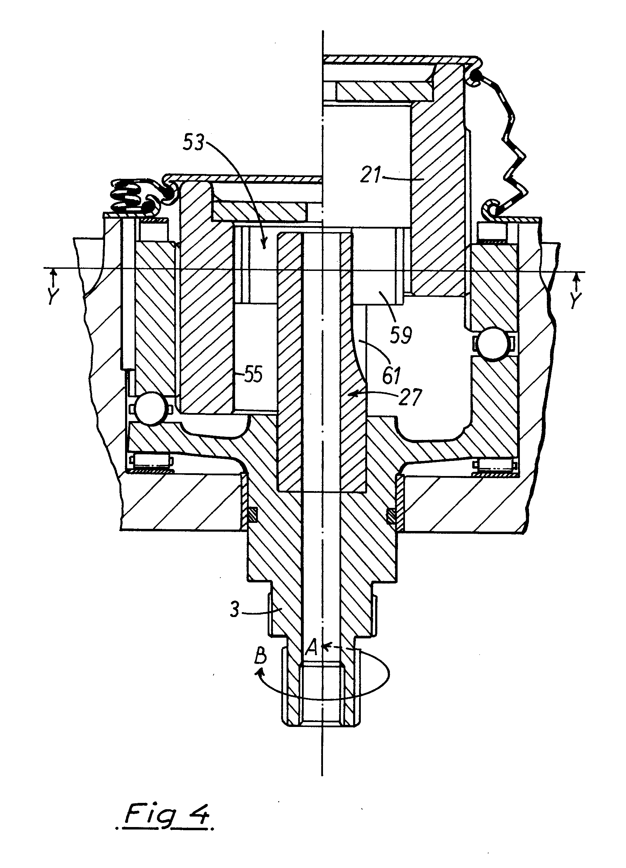

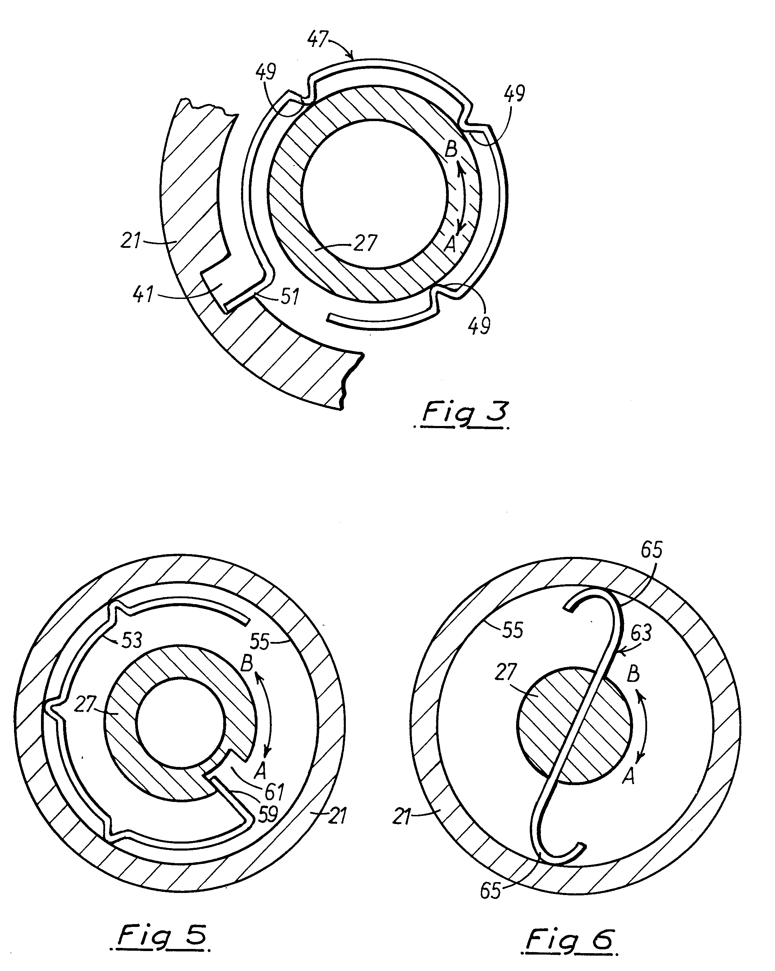

The embodiment of the present invention illustrated in Figs. 2 and 3 of the accompanying drawings is an improved version of the actuator of Fig. 1 and the same reference numerals as used in Fig. 1 will be used for the equivalent parts in Figs. 2 and 3. Basically the embodiment of Figs. 2 and 3 differs from the embodiment of Fig. 1 by virtue of the multi-plate clutch 23 and the wrap spring 25 being replaced by a C-shaped plate spring 47, and the drive shaft extension 27 being integral with the drive shaft 3. The C-shaped plate spring 47 extends over half-way around the drive shaft extension 27 and has a series of axially extending, inwardly directed, circumferentially spaced apart ribs 49 which engage the drive shaft extension 27, one end region 51 of the C-shaped spring 47 projecting generally radially outwardly of the drive shaft extension 27 and engaging with clearance in the axially extending groove 41 in the inner wall of the tappet 21.

In operation, the drive shaft 3 is rotated in the direction "A" to apply the brake. This drive shaft rotation moves the adjuster sleeve 19 axially via the helical ball ramp assembly 7, and results in the tappet 21 moving axially to apply the brake. With normal brake application when no adjustment is necessary, rotation of the drive shaft 3 and drive shaft extension 27, merely rotates the C-shaped spring 47, moving said one end region 51 of the spring 47 back and forth across the groove 41. However, when sufficient pad wear has occurred then extra rotation of the drive shaft 3 is required to apply the brake. This extra drive shaft rotation causes said one end region 51 of the spring to engage a circumferential edge of the groove 41 so that the spring grips tightly around the drive shaft extension 27, the tappet 21 being thus rotated with the drive shaft 3 and relative to the adjuster sleeve 19. When the brake has been applied any further rotation of the drive shaft 3 to increase the clamp force, causes the spring 47 to slide around the drive shaft extension 27. This is possible due to the large forces and torques involved at this time. When the brake is released spring action rotates the drive shaft 3 and drive shaft extension 27 back, causing said one end region 51 of the C-shaped spring 47 to move back across the groove 41. When said one end region 51 engages the other side edge of the groove, continued drive shaft rotation tends to unwind the spring from around the drive shaft extension 27 allowing the spring to slide around the drive shaft extension 27 so that the adjusted position of the tappet 21 and adjuster sleeve 19 is maintained.

The embodiment illustrated in Figs. 4 and 5 of the accompanying drawings is similar to the embodiment of Figs. 2 ;and 3, and like reference numerals are used for equivalent parts. The sole difference in the embodiment of Figs. 4 and 5 is that the C-shaped spring 53 is constructed so as to press outwardly against the inside wall 55 of the tappet 21, the spring having axially extending, circumferentially spaced apart ribs 57 which engage inside wall 55, and an inwardly directed end region 59 which engages with clearance in an axially extending groove 61 in the drive shaft extension 27. This embodiment operates in the same manner as the embodiment of Figs. 2 and 3, the tappet 21 and drive shaft extension 27 being locked together for brake application when adjustment is necessary and being relatively rotatable on brake release.

Fig. 6 illustrates a modified spring arrangement suitable for use in a slightly modified form of either Fig. 2 or Fig. 4. The spring 63 is S-shaped and secured to the drive shaft extension 27 so that its end regions 65 project generally radially outwardly thereform. The spring 63 is preferably secured in a diametrically extending slot in the drive shaft extension 27. Each curved end region 65 engages against the inside wall 55 of the tappet 21. Thus during drive shaft rotation in one direction "X" the spring can engage and grip the tappet 21, whilst in the opposite direction the spring flexes to allow for relative movement. To provide for normal brake application without adjustment spring 63 engages with clearance in the slot in the drive shaft extension 27 . Thus the clearance has to be first taken up before the spring can grip the tappet wall 55.

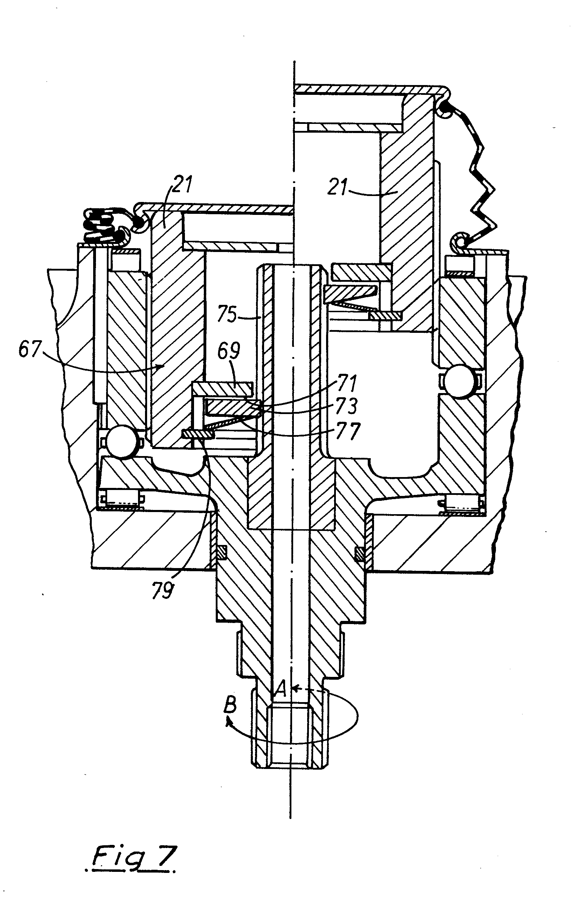

A further embodiment of the present invention is illustrated in Fig. 7. Once more like reference numerals will be used to identify like components as compared to the above-described embodiments. The sole difference in the embodiment of Fig. 7 is that the springs and clutches of the above-described embodiments has been replaced by a ratchet mechanism 67. The ratchet mechanism comprises a pair of interengaging annular ratchet members. One annular member 69 provided with a ratchet profile 71 on its lower face (as illustrated), is fixedly mounted coaxially within the tappet 21 on the tappet wall 55. The other annular ratchet member 73 is provided with a ratchet profile on its upper face (as illustrated), and is axially slidably located over the drive shaft extension 27. This other annular ratchet member 73 is keyed with clearance in groove 75 in the drive shaft extension 27 to allow for normal brake application without adjustment. The two annular ratchet members 69, 73 are biassed together by a Belleville washer 77 which engages between a circlip 79 fixed in the inside wall 55 of the tappet 21, and said axially movable other ratchet member 73. When adjustment is required the clearance in groove 75 is taken up and said other ratchet member 73 rotates with the drive shaft extension 27 causing the tappet 21 to rotate relative to the adjuster sleeve 19. When the brake is applied the force of the Belleville washer 77 is overcome, the adjuster sleeve being held against rotation by the torque at the thread resulting from the clamp force, so that the ratchet members rotate relative to each other. When the brake is released the said groove clearance is first taken up and then due to the shape of the ratchet flanks, the said other ratchet member 73 is rotated over said one ratchet member 69 allowing the tappet 21 and adjuster sleeve to maintain this adjusted position.

In a modified form of Fig. 7 (not illustrated), the ratchet members are designed to solely allow for relative rotation in one direction, i.e. the brakes-on direction. Brake release with adjustment maintained is provided for by a wrap spring clutch connection between the drive shaft and drive shaft extension.

In any of the above described embodiments of the present invention the tappet 21 may be wound back on the adjuster sleeve 19 by the insertion of a suitable tool through the hollow drive shaft 3 and drive shaft extension 27. The tool is merely engaged with the tappet 21 and rotated.

The present invention thus provides an automatic adjuster wherein the diameter of the thread between the tappet and adjuster sleeve can be optimised having regard to the overall brake actuator dimensions.

**Claims**

1. A brake actuator comprising a drive shaft (3) rotatably secured in an actuator housing (1) and coupled to an internally threaded adjuster sleeve (19) by coupling means (7) which convert rotational movement of the drive shaft (3) into axial movement of the adjuster sleeve (19), characterised in that the internally threaded adjuster sleeve (19) is retained against rotational movement and is screw threadedly engaged with a hollow tappet (21) within which a clutch mechanism (23, 25; 47; 53; 63; 67) for interconnecting the drive shaft (3) and tappet (21), is located.

2. A brake actuator as claimed in claim 1, wherein the coupling means (7) are in the form of a helical ball ramp assembly (9, 13, 17).

3. A brake actuator as claimed in claim 2, wherein the helical ball ramp assembly (9, 13, 17) comprises a cylindrical sleeve (9), the inner surface of which is splined to the drive shaft (3) so as to rotate with the drive shaft (3), and a further cylindrical sleeve (13) which is keyed against rotation, said sleeves (9, 13) being coaxially arranged with respect to each other and having helical axial end faces (11, 15) facing each other with a ball race assembly (17) located therebetween, and said further sleeve (13) engaging said adjuster sleeve (19).

4. A brake actuator as claimed in any one of claims 1 to 3, wherein said clutch mechanism (23, 25) comprises a multi-plate friction clutch (23) and a wrap spring clutch (25), the multi-plate friction clutch (23) being formed by annular members (29) located over an elongate drive shaft extension (27) which is coupled coaxially with the drive shaft (3) by means of the wrap spring clutch (25), the adjacent members (29) of the multi-plate clutch (23) having radially inwardly and outwardly extending tags (37, 39) respectively, which engage in an axially extending slot (43) in the drive shaft extension (27) and in an axially extending slot (41) in the inside wall of the hollow tappet (21), respectively, said annular plate members (29) being compressed and gripped together by a spring (33) which presses the plates (29) against a stop (31) on the inner wall of the hollow tappet (21).

5. A brake actuator as claimed in claim 4, wherein the wrap spring (25) locks the drive shaft (3) and said drive shaft extension (27) together for rotation in the rotational direction which corresponds to brake application.

6. A brake actuator as claimed in claim 4 or 5, wherein the inwardly directed tags (37) engage with clearance in the slot (43) in the drive shaft extension (27), and said outwardly directed tags (39) are a close fit in the slot (41) in the tappet (21), the clearance being sufficient to allow for sufficient drive shaft rotation for normal brake operation without the inwardly directed tags (37) engaging a wall of the slot (43) in the drive shaft extension (27), and rotating the tappet (21).

7. A brake actuator as claimed in claim 4 or 5, wherein the outwardly directed tags (39) engage with clearance in the slot (41) in the inner wall of the hollow tappet (21) and the inwardly directed tags (37) are a close fit in the slot (43) in the drive shaft extension (27), the clearance being sufficient to allow for sufficient drive shaft rotation for normal brake operation without the outwardly directed tags (39) engaging a wall of the slot (41) in the tappet (21), and rotating said tappet (21).

8. A brake actuator as claimed in any one of claims 1 to 7, wherein two adjuster sleeves (19) are coaxially arranged with respect to each other, with a resilient spacer (45) located therebetween.

9. A brake actuator as claimed in any one of claims 1 to 3, wherein said clutch mechanism is formed by a C-shaped plate spring (47) which engages around and grips an elongate drive shaft extension (27) which is integral and coaxial with said drive shaft (3), said C-shaped plate spring (47) having a number of axially extending, inwardly directed ribs (49) which engage the drive shaft extension (27), with one end region (51) of the plate spring (47) extending generally radially away from the drive shaft extension (27) and engaging in an axially extending slot (41) provided in the inner wall of the tappet (21), the slot (41) being circumferentially oversized with respect to the thickness of said one end region (51) of the C-shaped plate spring (47), the clearance thus produced being sufficient to allow for drive shaft rotation for normal brake operation, without said one end region (51) of the plate spring (47), engaging a wall of the slot (41) in the drive shaft extension (27), and rotating the tappet (21).

10. A brake actuator as claimed in any one of claims 1 to 3, wherein said clutch mechanism is formed by a C-shaped plate spring (53) which engages around an elongate drive shaft extension (27) which is integral and coaxial with said drive shaft (3), said C-shaped plate spring (53) having a number of axially extending, outwardly directed ribs which engage the inner wall (55) of the tappet (21), with one end region (59) of the plate spring (53) extending generally radially inwardly away from the tappet wall, and engaging in an axially extending slot (61) provided in the drive shaft extension (27), which slot (61) is circumferentially oversized with respect to the thickness of said one end region (59) of the C-shaped plate spring (53), the clearance thus produced being sufficient to allow for drive shaft rotation for normal brake operation, without said one end region (59) of the plate spring (53), engaging a wall of the slot (61) in the drive shaft extension (27), and rotating the tappet (21).

11. A brake actuator as claimed in any one of claims 1 to 3, wherein said clutch mechanism is formed by an S-shaped spring (63) which is secured transversely to an elongate drive shaft extension (27) which is integral and coaxial with said drive shaft (3), the middle region of the spring (63) being secured to the drive shaft extension (27) with a limited amount of rotational play about the axis of the drive shaft extension (27) so that opposite end regions of the spring (63) engage and grip the inner wall (55) of the tappet (21) solely in one direction of drive shaft rotation, the limited amount of rotational play being sufficient to allow for drive shaft rotation for normal brake operation, without the spring (63) rotating the tappet (21).

12. A brake actuator as claimed in any one of claims 1 to 3, wherein said clutch mechanism (67) comprises a pair of interengaging annular ratchet members (69, 73), one ratchet member (69) provided with a ratchet profile (71) on its lower face being fixedly mounted coaxially within the hollow tappet (21), and the other ratchet member (73) with a ratchet profile on its upper face being located over a drive shaft extension (27) which is coaxial with said drive shaft (3), said other ratchet member (73) being keyed with clearance to the drive shaft extension (27) and arranged to be axially movable along said drive shaft extension (27), said ratchet members (69, 73) being biassed together by a spring (77). said clearance being sufficient to allow for drive shaft rotation, for normal brake operation, without the ratchet members (69, 73) rotating the tappet (21).

3. A brake actuator as claimed in claim 12, wherein the interengaging ratchet faces each have different gradients to each side of each apex, so that the ratchet members (69, 73) can rotate relative to each other in both rotational directions.

14. A brake actuator as claimed in claim 12, wherein the interengaging ratchet members (69, 73) are designed to allow for relative rotation in solely one rotational direction, with a wrap spring clutch interconnecting said drive shaft (3) and said drive shaft extension (27) to lock said drive shaft (3) and said drive shaft extension (27) together solely for movement in said one rotational direction.

_Fig 1_

0225791

0225791

Fig 2.

_Fig 4._

0225791

_Fig 3_.

_Fig 5_.

_Fig 6_.

_Fig 7_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 008 452 (PONT-A-MOUSSON S.A.) <br> * Whole document; figures 1-6 * | 1-3 | F 16 D 65/56 |
| | --- | | |
| A | GB-A-1 442 562 (THE BENDIX CORP.) <br> * Whole document; figures 1-2 * | | |
| | ----- | | |
| | | | TECHNICAL FIELDS SEARCHED (Int. Cl.4) |
| | | | F 16 D 65/00 |

The present search report has been drawn up for all claims

| Place of search | Date of completion of the search | Examiner |
|---|---|---|
| THE HAGUE | 18-03-1987 | BRAEMS C.G.I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82